# EUROPÄISCHE PATENTSCHRIFT

(11) **EP 1 511 922 B1**
(45) Veröffentlichungstag und Bekanntmachung des Hinweises auf die Patenterteilung: **07.01.2009**
(21) Anmeldenummer: 03727240.8
(22) Anmeldetag: 20.05.2003
(51) Int. Cl.: F01L 1/34, F01L 1/46, F01L 1/352

(54) **GETRIEBE EINER NOCKENWELLE MIT ZWEI INEINANDER ANGEORDNETEN DREHSCHEIBEN, DIE DURCH EINE TAUMELSCHEIBE MITEINANDER VERBUNDEN SIND**
GEARBOX OF A CAMSHAFT COMPRISING TWO ROTATABLE DISKS WHICH ARE ARRANGED INSIDE EACH OTHER AND ARE CONNECTED BY MEANS OF A SWASH PLATE
ENGRENAGE D'UN ARBRE A CAMES COMPRENANT DEUX DISQUES ROTATIFS DISPOSES L'UN DANS L'AUTRE ET RELIES PAR UN DISQUE OSCILLANT

(30) Priorität: 22.05.2002 DE 10222475
(43) Veröffentlichungstag der Anmeldung: 09.03.2005
(73) Patentinhaber: AFT Atlas Fahrzeugtechnik GmbH, 58791 Werdohl (DE)
(72) Erfinder: AXMACHER, Detlef, 58636 Iserlohn (DE); GASPARO, Massimiliano, 58553 Halver (DE); NEUBAUER, Dirk, 58769 Nachrodt-Wiblingwerde (DE); PACHAN, Frank, 44319 Dortmund (DE); PFÜTZENREUTER, Lars, 58791 Werdohl (DE); WILKE, Markus, 72622 Nürtingen (DE)
(74) Vertreter: Grau, Ulf
(86) Internationale Anmeldenummer: PCT/DE2003/001620
(87) Internationale Veröffentlichungsnummer: WO 2003/098010

(56) Entgegenhaltungen:
- DE-A- 10 038 354
- US-A- 4 294 218
- PATENT ABSTRACTS OF JAPAN vol. 008, no. 234 (M-334), 26. Oktober 1984 (1984-10-26) & JP 59 115412 A (TOYOTA JIDOSHA KK), 3. Juli 1984 (1984-07-03)

## Beschreibung

Die Erfindung betrifft ein Getriebe einer Nockenwelle mit zwei ineinander angeordneten Drehscheiben, die durch eine Taumelscheibe miteinander verbunden sind, wie es beispielsweise in der DE 100 38 354 A1 beschrieben ist.

Ein Getriebe, das als Steuereinrichtung zum Verstellen des Drehwinkels einer ersten Drehscheibe gegenüber dem Drehwinkel einer zweiten Drehscheibe, die durch eine Taumelscheibe miteinander verbunden sind, ist in der gattungsbildenden Druckschrift DE 100 38 354 beschrieben. Die erste Drehscheibe wird dabei von der Nokkenwelle gebildet, und die zweite Drehscheibe wird von einem mit der Kurbelwelle verbundenen Nockenwellenrad einer Brennkraftmaschine gebildet.
Dabei sind an den dem Nockenwellenrad und an der Nockenwelle Zahnkränze unterschiedlicher Zahnzahl ausgebildet, in die ein auf der Taumelscheibe ausgebildeter Zahnkranz greift. Bei einer Drehung der Taumelscheibe wird durch die unterschiedliche Zahnzahl der Zahnkränze ein Verschieben des Drehwinkels der Nockenwelle gegenüber des Nockenwellenrades bewirkt. Dabei müssen die Zahnkränze sehr präzise mit einer hohen Fertigungsgenauigkeit hergestellt werden, wodurch hohe Kosten entstehen.

Der Erfindung liegt die Aufgabe zugrunde, ein Getriebe mit einer Taumelscheibe gemäß dem Oberbegriff des Patentanspruchs 1 anzugeben, bei dem die Verbindung zwischen der Taumelscheibe und den Drehscheiben kostengünstig hergestellt werden kann.

Diese Aufgabe wird erfindungsgemäß durch das Merkmal im Kennzeichen des Patentanspruchs 1 gelöst, wonach die Taumelscheibe mit der ersten Drehscheibe durch mindestens einen Zapfen verbunden ist, und mit der zweiten Drehscheibe durch einen Zahnkranz verbunden ist.

Dieser Zapfen kann grundsätzlich an der Taumelscheibe oder der ersten Drehscheibe ausgebildet sein. Bei mehr als einem Zapfen können diese auch an der Taumelscheibe und an der Drehscheibe ausgebildet sein. Dabei kann der Zapfen einteilig mit der Taumelscheibe oder mit der ersten Drehscheibe hergestellt sein. Alternativ kann der Zapfen beispielsweise durch Kleben, Schweißen, Einpressen, Löten oder Einschrauben mit der Taumelscheibe oder mit der ersten Drehscheibe verbunden sein.

Das Gegenstück des Zapfens zur Verbindung von Taumelscheibe und erster Drehscheibe wird von einer Aussparung gebildet, die aufgrund der Bewegung der Taumelscheibe schlitzförmig ausgebildet ist.

In einer weiteren Weiterbildung der Erfindung ist vorgesehen, daß der Zapfen und die schlitzförmige Aussparung eine Gleitpaarung bilden, wobei auf den Zapfen und/oder in die schlitzförmige Aussparung als Gegenlagerung eine Hülse aus einem gleitfähigen Material gesetzt ist. Diese Hülse kann beispielsweise aus Teflon, Grauguß, Messung oder Bronze hergestellt werden.

Insbesondere bei der Verwendung von mehr als einem Zapfen ist die als Gegenlagerung auf den Zapfen und/oder in die schlitzförmige Aussparung gesetzte Hülse zum Ausgleich von Fertigungstoleranzen vorgesehen. So können für die Montage des Getriebes Hülsen zum Aufsetzen auf den/die Zapfen mit unterschiedlicher Wandstärke bereitgehalten werden. Entsprechend können Hülsen zum Einsetzten in die schlitzförmige Aussparung hergestellt werden, deren Gleitbahn für den Zapfen nicht in der Mitte der Hülse ausgebildet ist. Bei entsprechend komplex aufgebauten Hülsen kann die Position der Gleitbahn einer Hülse zum Einsetzten in eine schlitzförmige Aussparung beispielsweise durch Schrauben eingestellt werden.

In einer weiteren Weiterbildung der Erfindung ist vorgesehen, daß für die Verbindung zwischen der Taumelscheibe und den beiden Drehscheiben eine eigene Schmiermittelversorgung vorgesehen ist, die beispielsweise aus einer mit dem Ölkreislauf verbundenen Düse besteht, die beim Betrieb des Getriebes den Zapfen und den Zahnkranz mit Motoröl besprüht.

In einer letzten Weiterbildung der Erfindung sind Mittel vorgesehen, daß die erste und äußere Drehscheibe als ein mit einer Kurbelwelle verbundenes Nockenwellenrad einer Brennkraftmaschine ausgebildet ist, daß die zweite und innere Drehscheibe mit einer Nockenwelle der Brennkraftmaschine verbunden ist, und daß das Getriebe zum Verstellen des Drehwinkels der Nockenwelle gegenüber dem Drehwinkel der Kurbelwelle ausgebildet ist.

Im folgenden soll das erfindungsgemäße Getriebe mit zwei ineinander angeordneten Drehscheiben, die durch eine Taumelscheibe miteinander verbunden sind, anhand von einem Ausführungsbeispiel im Zusammenhang mit zwei Figuren beschrieben und erläutert werden.

Es zeigen:
- Figur 1: ein axiales Schnittbild durch ein Getriebe mit einer Taumelscheibe, bei dem die erste Drehscheibe als Nockenwellenrad ausgebildet ist, und die zweite Drehscheibe als ein mit der Nockenwelle verbundenes Bauteil ausgebildet ist,
- Figur 2: ein Schnittbild durch das Getriebe zur Darstellung der die Zapfen sowie einen Zahnkranz tragenden Taumelscheibe.

Die Funktionsweise eines Getriebes mit einer Taumelscheibe zum Verstellen des Drehwinkels der Nockenwelle gegenüber dem Drehwinkel der Kurbelwelle zur Beeinflussung der Steuerzeiten des Ventilspiels der Gaswechselventile einer Brennkraftmaschine beruht darauf, daß eine auf der Antriebswelle einer Stelleinheit angeordnete Taumelscheibe gegenüber dieser Antriebswelle und gegenüber der Nokkenwelle einen axialen Stellwinkel aufweist, und dabei drehbar auf der Antriebswelle angeordnet ist.

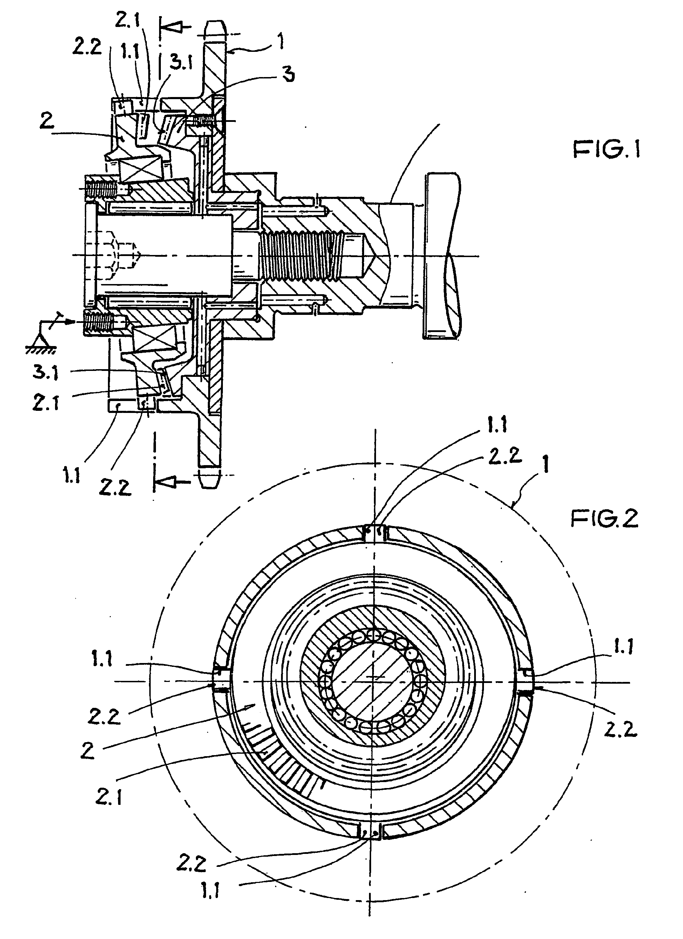

In der Figur 1 ist in einem Schnittbild ein die Nockenwelle 4 und das Nockenwellenrad 1 verbindende Taumelscheibe 2 dargestellt, wobei das eine Drehschiebe bildende Nockenwellenrad 1 über eine als Steuerkette ausgelegten Primärtrieb mit der Kurbelwelle der Brennkraftmaschine verbunden ist.
Die Taumelscheibe 2 weist einen ersten Zahnkranz 2.1 auf, der in einen zweiten Zahnkranz 3.1 einer Drehscheibe 3 greift, die mit einer Nockenwelle 4 verbunden ist. Durch den axialen Stellwinkel der Taumelscheibe 2 greifen lediglich die Zähne eines Winkelsegmentes des ersten Zahnkranzes 2.1 und des zweiten Zahnkranzes 3.1 ineinander. Die Größe des Winkelsegmentes, innerhalb dem die beiden Zahnkränze 2.1; 3.1 miteinander verzahnt sind, ist von dem axialen Stellwinkel der Taumelscheibe 2 gegenüber der Nockenwelle 4 bzw. der nicht dargestellten Antriebswelle der Stelleinheit gegenüber abhängig.

Zudem weist die Taumelscheibe 2 vier Zapfen 2.2 auf, die radial aus der äußeren Mantelfläche der Taumelscheibe 2 herausstehen. Die Taumelscheibe 2 ist innerhalb einer becherförmigen Ausformung des Nockenwellenrad 1 angeordnet, wobei die vier Zapfen 2.2 in vier Aussparungen 1.1 greifen, die in der becherförmigen Ausformung des Nockenwellenrades 1 ausgebildet sind. Aufgrund der Taumeldrehung der Taumelscheibe 2 sind die Aussparungen 1.1 des Nockenwellenrades 1 schlitzförmig ausgebildet. Die Anzahl der Zapfen 2.2 sowie die Herstellung der Zapfen 2.2 hängt von den Momenten ab, die über die Zapfen 2.2 von dem Nockenwellenrad 1 auf die Taumelscheibe 2 übertragen werden.

In der Figur 2 sind vier an der Taumelscheibe 2 ausgebildete Zapfen 2.2 für eine Brennkraftmaschine dargestellt, bei der hohe Momente übertragen werden. Um eine hohe Standfestigkeit der Zapfen 2.2 zu gewährleisten sind die Zapfen 2.2 einteilig mit der Taumelscheibe 2 hergestellt worden. Bei kleineren auftretenden Belastungen können die Zapfen 2.2 beispielsweise durch Reibschweißen auf die äußere Mantelfläche der Taumelscheibe 2 aufgebracht werden.

Durch die Taumelscheibe 2 besteht zwischen dem Nockenwellenrad 1 und der Nokkenwelle 4 eine kraftschlüssige Verbindung, die über die schlitzförmigen Aussparungen 1.1, die vier Zapfen 2.2 und die beiden Zahnkränze 2.1, 3.1 verläuft. Diese kraftschlüssige Verbindung bewirkt, daß wenn die Taumelscheibe 2 nicht von der Stelleinheit angetrieben wird, daß sich das Nockenwellenrad 1 und die Nockenwelle 4 in der gleichen Weise drehen.

Zur Beeinflussung des Drehwinkels der Nockenwelle 4 gegenüber dem Drehwinkel der Kurbelwelle weisen der erste Zahnkranz 2.1 der Taumelscheibe 2 und der zweite Zahnkranz 3.1 der Drehschiebe 3 eine unterschiedliche Zahnzahl auf. Diese unterschiedliche Zahnzahl führt dazu, daß bei der Taumeldrehung der Taumelscheibe 2 zwischen der Nockenwellenrad 1 und der Drehscheibe 3 ein Versatz entsteht. Dieser Versatz entspricht nach einer Taumelumdrehung der Taumelscheibe 2 dem Winkelabschnitt, den die den Unterschied in der Zahnzahl bildenden Zähnen einnehmen.

Weist beispielsweise der erste Zahnkranz 2.1 der Taumelscheibe 2 fünfzig Zähnen auf, und der zweite Zahnkranz 3.1 der Drehscheibe 3 einundfünfzig Zähnen auf, so führt eine Taumelumdrehung der Taumelscheibe 2 zu einem Versatz zwischen Nokkenwelle 4 und dem Nockenwellenrad 1 von genau einem Zahn (= 7.2 Grad). Entsprechend beträgt der Versatz zwischen dem Nockenwellenrad 1 und der Nockenwelle 4 nach fünfzig Taumelumdrehungen der Taumelscheibe 2 eine volle Umdrehung, d.h. die Übersetzung zwischen dem Nockenwellenrad 1 und der Nockenwelle 4 beträgt 50 : 1.

Zur Reduzierung von Reibwiderständen können in den schlitzförmigen Aussparungen 1.1 nicht dargestellte Hülsen aus Teflon angeordnet werden, in deren Laufspur die Zapfen 2.2 der Taumelscheibe 2 bei der Taumeldrehung oszillieren.
Diese Hülsen können zudem zum Ausgleich von Fertigungstoleranzen verwendet werden, indem bei der Montage des Getriebes unterschiedliche Hülsen bereitgestellt werden, deren Laufspur mittig und außermittig ausgebildet sind. Tritt ein Versatz zwischen den Zapfen 2.2 der Taumelscheibe 2 und einer schlitzförmigen Aussparung 1.1 des Nockenwellenrades 1 auf, wird dieser Versatz durch eine Hülse mit einer außermittig angeordneten Laufspur kompensiert.

Aufgrund der Reibung zwischen den eine unterschiedliche Zahnzahl aufweisenden Zahnkränzen 2.1, 3.1 ist im Bereich des Getriebes eine mit der Ölversorgung der Brennkraftmaschine verbundene Düse angeordnet, welche die Zahnkränze 2.1, 3.1 und damit das gesamte Getriebe mit Motoröl besprüht.

Auf der dem Zahnkranz 3.1 entgegengesetzten Seite der Taumelscheibe 3 ist eine nicht dargestellte, die Taumelscheibe 3 antreibende Stellvorrichtung angeordnet, die vorzugsweise als Elektromotor ausgebildet ist, die aber auch durch eine Hydraulik oder einen mechanischen Antrieb realisiert werden kann.

Durch die über Zapfen 2.2 mit dem Nockenwellenrad 1 verbundene Taumelscheibe 2 zum Verstellen des Drehwinkels der Nockenwelle 4 gegenüber dem Drehwinkel der Kurbelwelle werden die Fertigungskosten der Taumelscheibe 2 und des Nokkenwellenrades 1 reduziert, wobei eine standfeste Verbindung zwischen dem Nokkenwellenrad 1 und der Taumelscheibe 2 gegeben ist.

## Patentansprüche

1. Getriebe zum Verstellen des Drehwinkels der Nockenwelle (4) gegenüber dem Drehwinkel der Kurbelwell einer Brennkraftmaschine mit zwei ineinander angeordneten Drehscheiben (1, 3), die durch eine Taumelscheibe (2) miteinander verbunden sind, wobei die Taumelscheibe (2) mit der zweiten Drehscheibe (3) durch Zahnkränze (2.1, 3.1) verbunden ist, **dadurch gekennzeichnet, daß** die Taumelscheibe (2) mit der ersten Drehscheibe (1) durch mindestens einen Zapfen (2.2) verbunden ist, und daß die erste Drehscheibe als ein mit der Kurbelwelle verbundenes Nockenwellenrad (1) einer Brennkraftmaschine ausgebildet ist, und die zweite Drehscheibe (3) mit der Nockenwelle (4) der Brennkraftmaschine verbunden ist.

2. Getriebe nach Anspruch 1, **dadurch gekennzeichnet, daß** der mindestens eine Zapfen (2.2) einteilig mit der Taumelscheibe (2) oder mit der ersten Drehscheibe (1) hergestellt ist.

3. Getriebe nach Anspruch 1, **dadurch gekennzeichnet, daß** der mindestens eine Zapfen (2.2) durch Kleben und/oder Schweißen und/oder Einpressen und/oder Löten und/oder Einschrauben mit der Taumelscheibe (2) oder mit der ersten Drehscheibe (1) verbunden ist.

4. Getriebe nach einem der Ansprüche 1 bis 3, **dadurch gekennzeichnet, daß** der an der Taumelscheibe (2) oder der ersten Drehscheibe (1) ausgebildete mindestens eine Zapfen (2.2) in der ersten Drehscheibe (1) oder der Taumelscheibe (2) in einer schlitzförmigen Aussparung (1.1) angeordnet ist.

5. Getriebe nach Anspruch 4, **dadurch gekennzeichnet, daß** der Zapfen (2.2) und die schlitzförmige Aussparung (1.1) eine Gleitpaarung bilden, und daß auf den Zapfen (2.2) und/oder in die schlitzförmige Aussparung (1.1) als Gegenlagerung eine Hülse aus einem gleitfähigen Material angeordnet ist.

6. Getriebe nach Anspruch 4, **dadurch gekennzeichnet, daß** die Hülse aus Teflon oder Grauguß oder Messung oder Bronze hergestellt ist.

7. Getriebe nach Anspruch 5 oder 6, **dadurch gekennzeichnet, daß** die als Gegenlagerung auf den Zapfen (2.2) und/oder in die schlitzförmige Aussparung (1.1) aufgesetzte Hülse zum Ausgleich von Fertigungstoleranzen vorgesehen ist.

8. Getriebe nach einem der vorangegangenen Ansprüche, **dadurch gekennzeichnet, daß** für die Verbindung zwischen der Taumelscheibe (2) und den beiden Drehscheiben (1, 3) eine Schmiermittelversorgung vorgesehen ist.

9. Getriebe nach einem der vorangegangenen Ansprüche, **dadurch gekennzeichnet, daß** die erste Drehscheibe (1) die Äußere der beiden ineinander angeordneten Drehscheiben ist, und daß die zweite Drehscheibe (3) die innere der beiden ineinander angeordneten Drehscheiben ist.

## Claims

1. Gear for adjusting the rotary angle of the camshaft (4) with respect to the rotary angle of the crankshaft of an internal combustion engine, with two rotary discs (1, 3) which are arranged one in the other and are connected to one another by means of a swashplate (2), the swashplate (2) being connected to the second rotary disc (3) by means of toothed rims (2.1, 3.1), **characterized in that** the swashplate (2) is connected to the first rotary disc (1) by means of at least one tenon (2.2), and **in that** the first rotary disc is designed as a camshaft wheel (1), connected to the crankshaft, of an internal combustion engine, and the second rotary disc (3) is connected to the camshaft (4) of the internal combustion engine.

2. Gear according to Claim 1, **characterized in that** the at least one tenon (2.2) is produced in one piece with the swashplate (2) or with the first rotary disc (1).

3. Gear according to Claim 1, **characterized in that** the at least one tenon (2.2) is connected to the swashplate (2) or to the first rotary disc (1) by adhesive bonding and/or welding and/or pressing-in and/or soldering and/or screwing-in.

4. Gear according to one of Claims 1 to 3, **characterized in that** the at least one tenon (2.2) formed on the swashplate (2) or the first rotary disc (1) is arranged in a slot-shaped clearance (1.1) in the first rotary disc (1) or the swashplate (2).

5. Gear according to Claim 4, **characterized in that** the tenon (2.2) and the slot-shaped clearance (1.1) form a slide pairing, and **in that** a sleeve consisting of a slideable material is arranged, as counterbearing, on the tenon (2.2) and/or in the slot-shaped clearance (1.1).

6. Gear according to Claim 4, **characterized in that** the sleeve is produced from Teflon or grey cast iron or brass or bronze.

7. Gear according to Claim 5 or 6, **characterized in that** the sleeve placed as counterbearing onto the tenon (2.2) and/or into the slot-shaped clearance (1.1) is provided for the compensation of manufacturing tolerances.

8. Gear according to one of the preceding claims, **characterized in that** a lubricant supply is provided for the connection between the swashplate (2) and the two rotary discs (1, 3).

9. Gear according to one of the preceding claims, **characterized in that** the first rotary disc (1) is the outer of the two rotary discs arranged one in the other, and **in that** the secondary rotary disc (3) is the inner of the two rotary discs arranged one in the other.

## Revendications

1. Engrenage pour le réglage de l'angle de rotation de l'arbre à came (4) par rapport à l'angle de rotation du vilebrequin d'un moteur à combustion interne, comprenant deux disques rotatifs (1, 3) disposés l'un dans l'autre, qui sont connectés l'un à l'autre par un disque oscillant (2), le disque oscillant (2) étant connecté au deuxième disque rotatif (3) par des couronnes dentées (2.1, 3.1), **caractérisé en ce que** le disque oscillant (2) est connecté au premier disque rotatif (1) par au moins un tourillon (2.2) et **en ce que** le premier disque rotatif est réalisé sous forme d'une roue d'arbre à came (1) d'un moteur à combustion interne connectée au vilebrequin et le deuxième disque rotatif (3) est connecté à l'arbre à came (4) du moteur à combustion interne.

2. Engrenage selon la revendication 1, **caractérisé en ce que** l'au moins un tourillon (2,2) est réalisé d'une seule pièce avec le disque oscillant (2) ou avec le premier disque rotatif (1).

3. Engrenage selon la revendication 1, **caractérisé en ce que** l'au moins un tourillon (2.2) est connecté par collage et/ou soudage et/ou pressage et/ou brasage et/ou vissage au disque oscillant (2) ou au premier disque rotatif (1).

4. Engrenage selon l'une quelconque des revendications 1 à 3, **caractérisé en ce que** l'au moins un tourillon (2.2) réalisé sur le disque oscillant (2) ou le premier disque rotatif (1) est disposé dans un évidement en forme de fente (1.1) dans le premier disque rotatif (1) ou dans le disque oscillant (2).

5. Engrenage selon la revendication 4, **caractérisé en ce que** le tourillon (2.2) et l'évidement en forme de fente (1.1) forment un système d'association coulissante et **en ce qu'**une douille en matériau glissant est disposée en tant que contre-palier sur le tourillon (2.2) et/ou dans l'évidement en forme de fente (1.1).

6. Engrenage selon la revendication 4, **caractérisé en ce que** la douille est en téflon ou en fonte grise ou en laiton ou en bronze.

7. Engrenage selon la revendication 5 ou 6, **caractérisé en ce que** la douille placée en tant que contre-palier sur le tourillon (2.2) et/ou dans l'évidement en forme de fente (1.1) est prévue pour compenser les tolérances de fabrication.

8. Engrenage selon l'une quelconque des revendications précédentes, **caractérisé en ce que** l'on prévoit une alimentation en lubrifiant pour la connexion entre le disque oscillant (2) et les deux disques rotatifs (1, 3).

9. Engrenage selon l'une quelconque des revendications précédentes, **caractérisé en ce que** le premier disque rotatif (1) est le disque extérieur des deux disques rotatifs disposés l'un dans l'autre, et **en ce que** le deuxième disque rotatif (3) est le disque intérieur des deux disques rotatifs disposés l'un dans l'autre.
